# EUROPEAN PATENT SPECIFICATION

(11) **EP 2 706 719 B1**
(45) Date of publication and mention of the grant of the patent: **16.12.2015**
(21) Application number: 12856915.9
(22) Date of filing: 12.06.2012
(51) Int. Cl.: H04L 29/06

(54) **FILE SYNCHRONIZATION METHOD AND DEVICE**
DATENSYNCHRONISATIONSVERFAHREN UND -VORRICHTUNG
PROCÉDÉ ET DISPOSITIF DE SYNCHRONISATION DE FICHIERS

(30) Priority: 13.12.2011 CN 201110415376
(43) Date of publication of application: 12.03.2014
(73) Proprietor: Huawei Technologies Co., Ltd., Longgang District Shenzhen, Guangdong 518129 (CN)
(72) Inventor: WU, Fei, Shenzhen Guangdong 518129 (CN); ZHANG, Jin, Shenzhen Guangdong 518129 (CN); LI, Gaofeng, Shenzhen Guangdong 518129 (CN); LIU, Xubin, Shenzhen Guangdong 518129 (CN)
(74) Representative: Lord, Michael
(86) International application number: PCT/CN2012/076773
(87) International publication number: WO 2013/086842

(56) References cited:
- CN-A- 101 453 418
- CN-A- 102 404 338
- US-A1- 2011 151 837
- US-B2- 6 738 799
- US-B2- 7 734 826
- US-B2- 7 734 826

## Description

### FIELD OF THE INVENTION

The present invention relates to the field of communications technologies, and in particular, to a file synchronization method and device.

### BACKGROUND OF THE INVENTION

With the development of Internet technologies, more and more users prefer to use file synchronization to manage files on a terminal, so that the users can synchronize, at different places and on different terminals, update of the files to a server in time, and it is convenient for the users to acquire the latest file information from the server.

In the existing file synchronization technologies, after a user performs an update operation on files in a synchronization directory of the terminal, the terminal performs full scanning on the local synchronization directory once, and sends information of each file obtained by performing the scanning to the server for authentication, so as to determine an update state, such as add or delete, of the file. If the file is updated, the file is synchronized to the server. The drawback of the synchronization lies in that two-way synchronization between the terminal and the server, that is, synchronization of the update in the terminal to the server and synchronization of the update in the server to the terminal at the same time, cannot be implemented. Here, the update in the server may be an update after the server interacts with another terminal, and may also be an update of an operation on the server.
Document US 7734826 B2 discloses a synchronization process that is initiated by a client SA when it makes a sync poll call to the server, passing it the client sync index (CSI) identifying its current known state of the account. If the SSI value matches the CSI value passed in by the polling client, the client is up to date with the current state of its server account. In that case, the server SFS returns the SSI (having the same value as the CSI) back to the client. Otherwise, the server SFS returns the new higher SSI along with the server metadata information the client needs to transition its account from its current state to the server's current state. The server SFS maintains a three-level hierarchy of sync indices (SIs) in its metadata. At the highest level, there is an account SSI field that identifies the current state of the account. This is the first value checked by the server SFS on a client poll call. If this value matches the CSI value passed in by a polling client, the client directory is up to date. The directory sync index (DSI) fields reside at the middle level of the hierarchy. The server SFS maintains a directory table for each user account with a directory item for each user directory. Each directory item contains a DSI value associated with the last change to a file or directory within the directory. The server SFS uses this value to quickly find directories with changes that need to be pushed down to a syncing client. Directory items with DSI values greater than the value passed in by the polling client SA identify the directories with changes.
Document US 20110151837 A1 discloses a mobile communication terminal communicates with a central node to provide automatically synchronization of user content stored on a mobile device with user content stored at a central node, such as at a synchronization server. In this way, automatic two-way synching may be provided, the user may monitor, view, update, change, add to or delete all or any field of user content using a web interface stored for a mobile device at a central node such as at a synchronization server cloud or data storage cloud, using a remote device, including an off-line device. Current location of the mobile terminal may also be tracked at the central node.

### SUMMARY OF THE INVENTION

Embodiments of the present invention provide a file synchronization method and device, capable of implementing two-way synchronization between a device for synchronization and a server.

An embodiment of the present invention provides a file synchronization method, including:
acquiring a first file list snapshot, where the first file list snapshot includes information of a local file list stored when last synchronization ends;
comparing the first file list snapshot with information of a current local file list to acquire a second file list snapshot, where the second file list snapshot includes an update operation of the current local file list;
sending a file list snapshot request to a server;
receiving a third file list snapshot sent by the server, where the third file list snapshot includes information of a file list of the server; and
determining, according to the second file list snapshot and the third file list snapshot, an identifier and an operation of a file to be synchronized, and performing file synchronization with the server according to the identifier and the operation of the file to be synchronized.

An embodiment of the present invention provides a device for synchronization, including:
a first acquisition unit, configured to acquire a first file list snapshot, where the first file list snapshot includes information of a local file list stored when last synchronization ends;
a second acquisition unit, configured to compare the first file list snapshot with information of a current local file list to acquire a second file list snapshot, where the second file list snapshot includes an update operation of the current local file list;
a sending unit, configured to send a file list snapshot request to a server;
a receiving unit, configured to receive a third file list snapshot sent by the server, where the third file list snapshot includes information of a file list of the server; and
a synchronization unit, configured to determine, according to the second file list snapshot and the third file list snapshot, an identifier and an operation of a file to be synchronized, and perform file synchronization with the server according to the identifier and the operation of the file to be synchronized.

It may be seen from the foregoing technical solutions provided by the embodiments of the present invention that, in the embodiments of the present invention, a second file list snapshot includes an update operation of a current local file list, a third file list snapshot includes information of a file list of a server, and an operation of a file to be synchronized that is determined according to the second file list snapshot and the third file list snapshot includes both an update operation of a file in the local file list and an update operation of a file in the file list of the server. Therefore, two-way synchronization between the device for synchronization and the server can be implemented according to an identifier and the operation of the file to be synchronized.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a flow chart of a file synchronization method provided by an embodiment of the present invention;
FIG. 2 is a signaling flow chart of a file synchronization method provided by an embodiment of the present invention; and
FIG. 3 is a structural diagram of a device for synchronization provided by an embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

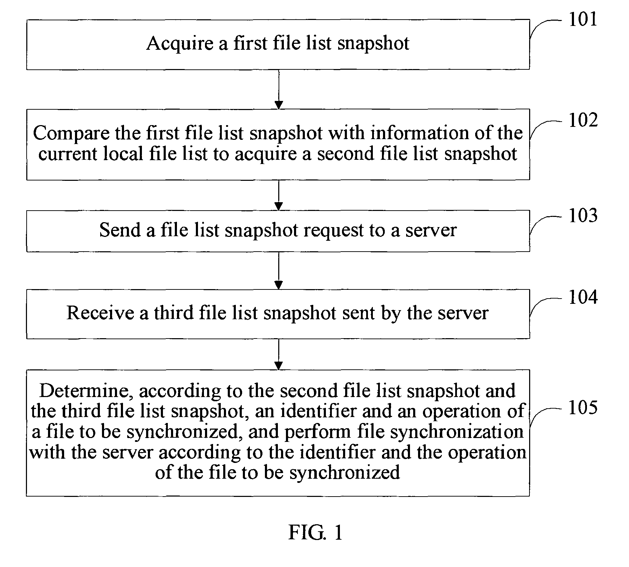

FIG. 1 shows a flow of a file synchronization method provided by an embodiment of the present invention. In this embodiment, preferably, a terminal is used as a device for synchronization, that is, an execution subject of file synchronization. The embodiment specifically includes the following steps:
101: Acquire a first file list snapshot.

Specifically, the terminal acquires a first file list snapshot, where the first file list snapshot includes information of a local file list stored when last synchronization ends, and the information refers to information of multiple files in the file list. In the embodiment of the present invention, the file list snapshot refers to image information of a file list at a certain time point. The file list snapshot mainly includes file list information and a file state, where the file state may be set to an initial state, and the file state is used to reflect an update operation of a file in the file list during later comparison, so as to determine a future operation of a file.

102: Compare the first file list snapshot with information of the current local file list to acquire a second file list snapshot.

Specifically, the terminal scans its local file list, compares information of a current local file list obtained by scanning the local file list with information in the first file list snapshot, acquires a finished update operation of the local file list with respect to the first file list snapshot, where the update operation refers to an update operation of a file in the file list snapshot, such as Local File Add, Local File Delete or Local File Modify, and the terminal adds the update operation of the local file list to the second file list snapshot, where the second file list snapshot may be an updated first file list snapshot or a regenerated file list snapshot.

103: Send a file list snapshot request to a server.

Specifically, the terminal sends a file list snapshot request to the server, so as to acquire information of a file list of the server.

104: Receive a third file list snapshot sent by the server.

Specifically, the terminal receives a third file list snapshot sent by the server, where the third file list snapshot is generated after the server receives the file list snapshot request, and includes information of a file list of the server.

In addition, because the server may perform a synchronization operation with another terminal in a period from the end of the last synchronization of the terminal to sending the file list snapshot request to the server in the current synchronization, file information in the server is updated. Therefore, the information of the file list of the server may include update information.

105: Determine, according to the second file list snapshot and the third file list snapshot, an identifier and an operation of a file to be synchronized, and perform file synchronization with the server according to the identifier and the operation of the file to be synchronized.

Specifically, the terminal compares the second file list snapshot with the third file list snapshot to determine a finished update operation in the file list of the server. Therefore, an identifier and an operation of a file to be synchronized are determined according to a finished update operation of the local file list included in the second file list snapshot and the finished update operation of the file list of the server, where the operation of the file to be updated includes upload, download, rename or delete.

Preferably, the terminal determines an operation category according to the update operation of the local file list included in the second file list snapshot and the update operation of the file list of the server, and merges the update operation of the local file list and the update operation of the file list of the server according to the operation category, so as to determine the identifier and the operation of the file to be synchronized.

After determining the identifier and the operation of the file to be synchronized, the terminal performs a file synchronization operation with the server according to the identifier and the operation of the file to be synchronized.

It may be seen from the foregoing description that, in this embodiment, a second file list snapshot includes an update operation of a current local file list, a third file list snapshot includes information of a file list of a server, and an operation of a file to be synchronized that is determined according to the second file list snapshot and the third file list snapshot includes both an update operation of a file in the local file list and an update operation of a file in the file list of the server. Therefore, two-way synchronization between the device for synchronization and the server can be implemented according to the identifier and the operation of the file to be synchronized.

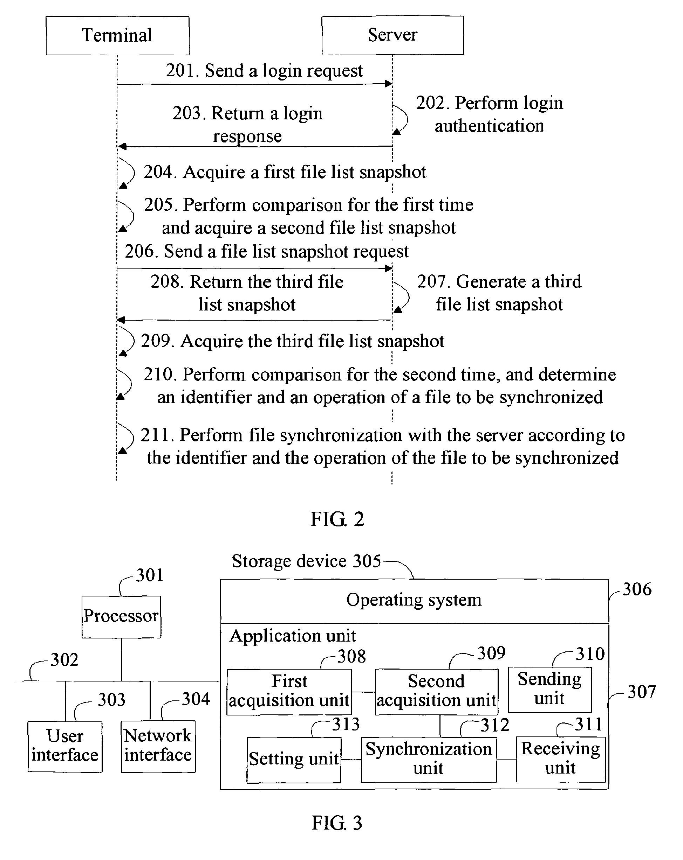

FIG. 2 shows a signaling flow of a file synchronization method provided by an embodiment of the present invention. In this embodiment, preferably, a terminal is used as a device for synchronization. The embodiment specifically includes the following steps:
201: Send a login request.

Specifically, the terminal sends a login request to a server, where the login request includes a user identifier, and the user identifier may be a user name or a password. The login request may further include a terminal identifier, where the server may distinguish terminals according to terminal identifiers when multiple terminals log in at the same time by using the same user name.

202: Perform login authentication.

Specifically, after receiving the login request, the server acquires the user identifier in the login request, authenticates permission of the user identifier by querying user database information, and sends an authentication result to the terminal. The server may further authenticate the terminal identifiers, so as to distinguish different terminals.

203: Return a login response.

Specifically, the terminal receives the authentication result sent by the server, where the authentication result may be login failure or login success. After the login succeeds, the terminal may set a synchronization directory, and at the same time, the terminal may further set a synchronization mode in consideration of service demands such as limitation of network traffic. The synchronization mode includes one-way synchronization (including one-way upload synchronization and one-way download synchronization), two-way synchronization or selective synchronization. The one-way synchronization refers to that update is synchronously performed from the terminal to the server or from the server to the terminal in the synchronization process; the two-way synchronization refers to that synchronization is performed between the terminal and the server in a two-way manner; and the selective synchronization refers to that a user is allowed to selectively synchronize files, for example, merely synchronize a certain subdirectory or files of a certain type.

204: Acquire a first file list snapshot.

Specifically, after the login succeeds, the terminal acquires a first file list snapshot, where the first file list snapshot includes information of a file list stored after the last synchronization between the terminal and the server ends, and the information may be stored on the terminal locally. Therefore, the terminal may directly read the first file list snapshot locally. In addition, the first file list snapshot may include a file identifier, a file path, file creation time, file or directory, or a file state, where the file identifier may be a file name or other file identification information; and the file state is used to reflect an update operation of a file in the file list. Moreover, the first file list snapshot may further include a version number, where the version number identifies version information of file lists in the directories to be synchronized on the terminal and in the server when the last synchronization ends.

It should be noted that, if it is the first time that the terminal performs synchronization, that is, the last synchronization process does not exist, no first file list snapshot exists on the terminal; alternatively, even if a first file list snapshot exists on the terminal, the first file list snapshot fails to be read, for example, the first file list snapshot is lost or damaged, the terminal needs to directly scan files and directories in a local synchronization directory to reconstruct a first file list snapshot.

For example, an example of the first file list snapshot is given below.

| file identifier | file path | file creation time | file or directory | file state |
|---|---|---|---|---|
| 1.txt | \ | 1319162967 | 0 | initial |
| 2.txt | \ | 1319163850 | 0 | initial |
| Hello | \ | 1319199057 | 1 | initial |
| a.txt | \ | Hello 1313916412 | 0 | initial |

In this example, the first file list snapshot includes information related to files such as 1.txt, 2.txt, a Hello directory, and a.txt in the Hello directory; each record includes a file identifier, a file path, file creation time, file or directory, and a file state, where in the column of file or directory, 0 represents a file and 1 represents a directory; and the file state is initially set to initial.

205: Perform comparison for the first time and acquire a second file list snapshot.

The terminal scans a local file list, compares the information (for example, the file identifier, the file path, the file creation time, file or directory, or the file state) related to a file obtained by scanning the local file list with the information (for example, the file identifier, the file path, the file creation time, file or directory, or the file state) in the first file list snapshot, determines the change of the current file by comparing the information of the current file with the corresponding information in the first file list snapshot, and generates a second file list snapshot, where the second file list snapshot may be an updated first file list snapshot or a regenerated snapshot.

The second file list snapshot includes an update operation of the local file list. Preferably, an update operation of each file is recorded in the column of the file state in the second file list snapshot, and at this time, the file state is changed from the initial state to an update operation, where the update operation includes Local File Add, Local File Delete or Local File Modify.

Optionally, the update operation of the current local file list is recorded in the first file list snapshot, that is, the updated first file list snapshot is used as the second file list snapshot. Specifically, if the first file list snapshot includes information of a corresponding file, a file state about the file in the first file list snapshot is modified; if the first file list snapshot does not include the information of the corresponding file, a record about the file is added in the first file list snapshot, and a state of the file is set to an update operation.

For example, continuing with the example given above, and assuming that the update operation of the terminal includes: deleting the file 1.txt, renaming 2.txt as 2-rename.txt, and renaming the Hello directory as Hello-rename, the information of the files and the directory in the current synchronization directory obtained by the terminal by performing scanning is as follows:

| file identifier | file path | file creation time | file or directory |
|---|---|---|---|
| 2-rename.txt | \ | 1319163850 | 0 |
| Hello-rename | \ | 1319199057 | 1 |
| a.txt | \Hello-rename | 1313916412 | 0 |

When the file information of 2-rename.txt is scanned, the terminal finds that no record about the file exists in the first file list snapshot; then the terminal adds the record in the first file list snapshot and sets the state of the file to Local Add (local_add). When the file a.txt in the Hello-rename directory is scanned, because there is no record of Hello-rename\a.txt in the first file list snapshot, the terminal adds the record in the first file list snapshot and sets the state of the file to Local Add (local_add). When the terminal finishes scanning all files in the directory Hello-rename, the terminal does not find the record of Hello-rename in the first file list snapshot; then, the terminal adds the record of Hello-rename in the first file list snapshot and also updates the state Local Add (local_add).

After the current files and directories in the synchronization directory are completely scanned, the records without an update state in the first file list snapshot are all marked as Local

Delete (local_del). Therefore, after the first comparison ends, the change information included in the updated first file list snapshot is as follows:

| file identifier | file path | file creation time | file or directory | file state |
|---|---|---|---|---|
| 1.txt | \ | 1319162967 | 0 | local_del |
| 2.txt | \ | 1319163850 | 0 | local_del |
| Hello | \ | 1319199057 | 1 | local_del |
| a.txt | \Hello | 1313916412 | 0 | local_del |
| 2-rename.txt | \ | 1319163850 | 0 | local_add |
| Hello-rename | \ | 1319199057 | 1 | local_add |
| a.txt | \Hello-rename | 1313916412 | 0 | local_add |

After the first comparison, the updated first file list snapshot, that is, the second file list snapshot, includes an update operation of a file in the local file list.

206: Send a file list snapshot request.

Specifically, the terminal sends a file list snapshot request to the server, so as to acquire current information of a file list of the server.

207: Generate a third file list snapshot.

Specifically, after receiving the file list snapshot request sent by the terminal, the server generates a third file list snapshot according to the information of the file list of the server, where the third file list snapshot includes the information of the file list of the server, and specifically may include a file identifier, a file path, file creation time, file or directory, or a file state; the initial file state may be an initial state.

It should be noted that, if the server has not performed the synchronization operation with another terminal in the period from the end of the last synchronization of the terminal to the current synchronization, the information of the file list in the synchronization directory of the server remains unchanged. If the server has performed the synchronization operation with another terminal in the period from the end of the last synchronization of the terminal to the current synchronization, the information of files in the synchronization directory of the server is changed, and then the second file list snapshot includes update information of the file list.

208: Return the third file list snapshot.

Specifically, after generating the third file list snapshot, the server sends the third file list snapshot to the terminal.

209: Acquire the third file list snapshot.

Specifically, the terminal receives and acquires the third file list snapshot sent by the server.

210: Perform comparison for the second time, and determine an identifier and an operation of a file to be synchronized.

After acquiring the third file list snapshot, the terminal compares the second file list snapshot with the third file list snapshot to determine an update operation of the file list of the server, such as Server Add Operation, Server Delete Operation, Server Modify Operation or other operations. Therefore, an identifier and an operation of a file to be synchronized are determined according to the update operation of the local file list included in the second file list snapshot and the update operation of the file list of the server, where the operation of the file to be synchronized includes Upload, Download, Rename or Delete.

Specifically, the third file list snapshot may further include a version number, where the version number identifies version information of the file list in the synchronization directory of the server when the last synchronization ends, and if the server has performed a synchronization operation with another terminal between the current synchronization and the last synchronization, the file list of the server is updated, and then the version number is changed. Likewise, the first file list snapshot in the terminal may further include a version number, where the version number identifies version information of a file list in a local synchronization directory when the last synchronization ends, and because the information of the file list in the local synchronization directory is consistent with that of the file list in the synchronization directory of the server when the last synchronization ends, the version number also records the version information of the file list in the synchronization directory of the server when the last synchronization ends. That is, if the server has not performed the synchronization operation with another terminal, the version number in the first file list snapshot is the same as the version number in the third file list snapshot.

The terminal compares the version number in the first file list snapshot in the terminal with the version number in the third file list snapshot acquired from the server, and if the two version numbers are the same, it indicates that the server has not performed the synchronization operation with another terminal between the current synchronization and the last synchronization, that is, the file list in the synchronization directory of the server remains unchanged. At this time, the terminal can determine, according to the update operation of the file list in the second file list snapshot, the identifier and the operation of the file to be synchronized.

Specifically, the terminal first classifies update operations in the second file list snapshot to determine an operation category, such as Local Add local_add, Local Delete local_del or Local Modify local_modify. Because some file states may be logically merged, the file states of the foregoing category are merged according to a relevant merging rule, so as to determine the corresponding file operation; while for file states that cannot be merged, the file operation is directly determined according to the file state. For example, for a rename operation of a local file, the second file list snapshot includes a Local Delete local_del operation of the original file as well as a Local Add local_add operation of the renamed file. At this time, the related information of the original file may be compared with that of the renamed file to determine to merge local_del and local_add and determine a rename file renameFile operation. In this case, a request for performing a renameFile operation on the original file is sent to the server, and the server can implement synchronization with the file in the terminal by merely performing a renaming operation on the original file. If merging is not performed, it is necessary to first send an operation request for deleting the original file to the server, and then send a request for adding the renamed file. The server needs to first delete the original file according to the operation request for deleting the original file, and then receive, according to the request for adding the renamed file, the renamed file uploaded by the terminal. Therefore, the merging of the file states can improve the file synchronization efficiency.

If the two version numbers are different, it indicates that the server has performed the synchronization operation with another terminal between the current synchronization and the last synchronization, that is, the file list in the synchronization directory of the server is changed. At this time, the terminal determines, according to the second file list snapshot and the third file list snapshot, an identifier and an operation of the file to be synchronized. Specifically, after comparing the second file list snapshot with the third file list snapshot, the terminal first determines the update operation of the file list of the server, and then determines an identifier and an operation of the file to be synchronized in such a case according to the update operation of the file list in the second file list snapshot and the update operation of the file list of the server, and by using the same method for determining the identifier and the operation of the file to be synchronized when the version numbers are the same.

In addition, this embodiment merely lists some simple merging rules and file operations. For a complicated file operation, such as file modify, the terminal needs to determine the file to be modified, and the user determines the file to keep and the file to delete.

211: Perform file synchronization with the server according to the identifier and the operation of the file to be synchronized.

Specifically, after determining the identifier and the operation of the file to be synchronized, the terminal sends a file synchronization request to the server, where the synchronization request includes operation information of the file to be synchronized; the server receives the file synchronization request, and acquires the operation information carried in the request, so as to perform relevant operations on the files in the synchronization directory of the server, thereby implementing synchronization with the file list in the synchronization directory of the terminal. After the finish of the synchronization, the update in the file list of the terminal is synchronized to the server, and likewise, the update in the file list of the server is synchronized to the terminal, that is, finally, the two-way synchronization between the terminal and the server is implemented.

It should be noted that, after the terminal sends the file synchronization request to the server, if the server is performing the file synchronization operation with another terminal, that is, the server is in a state of performing file synchronization with another terminal, the server may send to the terminal the state indicating that the server is performing file synchronization with another terminal. Therefore, at this time, the terminal may receive the state indicating that the server is performing file synchronization with another terminal, and suspend the file synchronization operation with the server. Further, after suspending the file synchronization operation with the server, the terminal may send the file synchronization request to the server at a specific time interval (for example, 30 seconds); or the terminal receives a message sent by the server indicating that the server is in an idle state, and then sends the file synchronization request to the server, so as to perform the file synchronization operation with the server.

For example, it is assumed that the generated identifier and operation of the file to be synchronized are as follows:

| file identifier | operation |
|---|---|
| 1.txt | removefile |
| 2.txt | renamefile |

The operation of 1.txt and 2.txt is a Delete File operation, and then the terminal sends to the server a hypertext transfer protocol (HTTP: HyperText Transfer Protocol) request shown as follows:

```
          POST http://syncbox.dbank.com/app/pc/disk.removefile.php
          HTTP/1.1 NSP-Auth:AccessToken ClientID=3d4e901399d4c0a9aeae4727
          Host:syncbox.dbank.com
          Path=%2F&files=["1%2Etxt"]
          HTTP/1.1 200 ok
          {"action":"true", "successList":[ {"name":"1.txt"}]}
          POST http://syncbox.dbank.com/app/pc/disk.removefile.php
          HTTP/1.1 NSP-Auth:AccessToken ClientID=3d4e901399d4c0a9aeae4727
          Host:syncbox.dbank.com
          Path=%2F&files=["1 %2Etxt"]
          HTTP/1.1 200 ok
          {"action":"true", "successList":[{"name":"2.txt"}]}
```

After receiving the HTTP request, the server deletes, according to the information of Delete File (removefile) 1.txt and removefile 2.txt carried in the request, the files 1.txt and 2.txt in the directory to be synchronized on the server. For other files and operations, the terminal may send similar file synchronization requests to finish the synchronization with the server.

Upon success of the synchronization processing of the files in the synchronization directories of the terminal and the server, the terminal further stores a snapshot of a file list in the synchronization directory of the server or the terminal (at this time, the file lists in the synchronization directories of the server and the terminal are consistent with each other), and uses the snapshot as a first file list snapshot during the next synchronization. In addition, a version number of the first file list snapshot is regenerated, and the version number of the file list in the synchronization directory of the server is also updated to be the regenerated version number to indicate the consistency between the file lists in the synchronization directories of the terminal and the server.

It may be seen from this embodiment that, the terminal determines, through two times of comparison, the identifier and the operation of the file to be synchronized, and performs synchronization with the server according to the identifier and the operation of the file to be synchronized. In the specific synchronization process, the terminal sends a corresponding operation request, such as an upload request, a download request, a rename request or a delete request, to the server according to the operation of the file to be synchronized, and the server performs corresponding processing according to the received relevant operation request. The server does not need to determine the identifier and the operation of the file to be synchronized in the whole synchronization process, so such a synchronization method can effectively reduce the processing burden of the server.

It may be seen from the foregoing description that, in this embodiment, a second file list snapshot includes an update operation of a current local file list, a third file list snapshot includes information of a file list of a server, and an operation of a file to be synchronized that is determined according to the second file list snapshot and the third file list snapshot includes both an update operation of a file in the local file list and an update operation of a file in the file list of the server. Therefore, two-way synchronization between the device for synchronization and the server can be implemented according to an identifier and the operation of the file to be synchronized.

Correspondingly, FIG. 3 shows a device for synchronization, provided by another embodiment of the present invention, where the device includes:
a first acquisition unit 308, configured to acquire a first file list snapshot, where the first file list snapshot includes information of a local file list stored when last synchronization ends;
a second acquisition unit 309, configured to compare the first file list snapshot acquired by the first acquisition unit 308 with information of a current local file list to acquire a second file list snapshot, where the second file list snapshot includes an update operation of the current local file list, where specifically, the device for synchronization, scans a local file list, compares information related to a file obtained by scanning the local file list with the information in the first file list snapshot, determines the change of the current file by comparing the information of the current file with the corresponding information in the first file list snapshot, and generates a second file list snapshot, and the second file list snapshot may be an updated first file list snapshot or a regenerated snapshot;
a sending unit 310, configured to send a file list snapshot request to the server, so as to acquire current information of a file list of the server;
a receiving unit 311, configured to receive a third file list snapshot sent by the server, where the third file list snapshot includes information of the file list of the server; and
a synchronization unit 312, configured to determine, according to the second file list snapshot acquired by the second acquisition unit 309 and the third file list snapshot received by the receiving unit 311, an identifier and an operation of a file to be synchronized, and perform file synchronization with the server according to the identifier and the operation of the file to be synchronized.

The foregoing device for synchronization, may be a terminal performing data interaction with the server. FIG. 3 further shows a structure of a terminal provided by an embodiment of the present invention, where the terminal may include at least one processor 301, at least one network interface 304, a storage device 305, and at least one communication bus 302 configured to implement connection and communication between the components. The terminal may further include a user interface 303 configured to implement interaction with a user. The storage device 305 may include:
an operating system 306, configured to process various basic system services and execute tasks based on hardware; and
an application unit 307, configured to determine, according to an acquired update operation of a local file list and an update operation of a file list of the server, an identifier and an operation of a file to be synchronized, and perform file synchronization with the server according to the identifier and the operation of the file to be synchronized. The application unit 307 specifically includes:
   a first acquisition unit 308, configured to acquire a first file list snapshot, where the first file list snapshot includes information of a local file list stored when last synchronization ends;
   a second acquisition unit 309, configured to compare the first file list snapshot acquired by the first acquisition unit 308 with information of the current local file list to acquire a second file list snapshot, where the second file list snapshot includes an update operation of the current local file list, where specifically, the terminal scans a local file list, compares information related to a file obtained by scanning the local file list with the information in the first file list snapshot, determines the change of the current file by comparing the information of the current file with the corresponding information in the first file list snapshot, and generates a second file list snapshot, and the second file list snapshot may be an updated first file list snapshot or a regenerated snapshot;
   a sending unit 310, configured to send a file list snapshot request to the server, so as to acquire current information of a file list of the server;
   a receiving unit 311, configured to receive a third file list snapshot sent by the server, where the third file list snapshot includes information of the file list of the server; and
   a synchronization unit 312, configured to determine, according to the second file list snapshot acquired by the second acquisition unit 309 and the third file list snapshot received by the receiving unit 311, an identifier and an operation of a file to be synchronized, and perform file synchronization with the server according to the identifier and the operation of the file to be synchronized.

Specifically, the synchronization unit 312 is configured to determine an update operation of the file list of the server according to the second file list snapshot acquired by the second acquisition unit 309 and the third file list snapshot received by the receiving unit 311, and then determine, according to the update operation of the local file list and the update operation of the file list of the server, the identifier and the operation of the file to be synchronized. In addition, the synchronization unit 312 may be further configured to suspend the file synchronization operation with the server when receiving a state sent by the server indicating that the server is performing file synchronization with another terminal.

In another embodiment of the present invention, the device may further include:
a setting unit 313, configured to set a synchronization mode, where the synchronization mode includes one-way synchronization, two-way synchronization or selective synchronization, and after the setting unit 313 sets the specific synchronization mode, the synchronization unit 312 performs file synchronization with the server according to the synchronization mode set by the setting unit 313.

It may be seen from the foregoing description that, in this embodiment, a second file list snapshot includes an update operation of a current local file list, a third file list snapshot includes information of a file list of a server, and an operation of a file to be synchronized that is determined according to the second file list snapshot and the third file list snapshot includes both an update operation of a file in the local file list and an update operation of a file in the file list of the server. Therefore, two-way synchronization between the device for synchronization and the server can be implemented according to an identifier and the operation of the file to be synchronized.

The foregoing terminal may participate in the execution of the method shown in FIG. 1 or FIG. 2, and the operation flow is not described in detail herein again.

Persons of ordinary skill in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, optical disk, Read-Only Memory (ROM), or Random Access Memory (RAM)..

Specific cases are used for illustrating principles and implementation manners of the present invention. The descriptions of the embodiments are merely for understanding the technical solutions of the present invention. Meanwhile, persons of ordinary skill in the art may make modifications to specific implementation manners and application ranges according to the ideas of the present invention. In conclusion, the content of the specification shall not be construed as a limitation to the present invention.

## Claims

1. A file synchronization method, comprising:
acquiring a first file list snapshot, wherein the first file list snapshot comprises information of a local file list stored when last synchronization ends;
comparing the first file list snapshot with information of a current local file list to acquire a second file list snapshot, wherein the second file list snapshot comprises an update operation of the current local file list;
sending a file list snapshot request to a server;
receiving a third file list snapshot sent by the server, wherein the third file list snapshot comprises information of a file list of the server; and
determining, according to the second file list snapshot and the third file list snapshot, an identifier and an operation of a file to be synchronized, and performing file synchronization with the server according to the identifier and the operation of the file to be synchronized.

2. The method according to claim 1, wherein the update operation of the current local file list comprises Local Add, Local Delete and Local Modify.

3. The method according to claim 2, wherein the determining, according to the second file list snapshot and the third file list snapshot, the identifier and the operation of the file to be synchronized comprises:
determining, according to the second file list snapshot and the third file list snapshot, an update operation of the file list of the server; and
determining, according to the update operation of the local file list and the update operation of the file list of the server, the identifier and the operation of the file to be synchronized.

4. The method according to claim 3, wherein the determining, according to the update operation of the local file list and the update operation of the file list of the server, the identifier and the operation of the file to be synchronized comprises:
determining an operation category according to the update operation of the local file list and the update operation of the file list of the server;
merging the update operation of the local file list and the update operation of the file list of the server according to the operation category, so as to determine the identifier and the operation of the file to be synchronized.

5. The method according to any one of claims 1 to 4, wherein the performing the file synchronization with the server according to the identifier and the operation of the file to be synchronized further comprises:
suspending the file synchronization operation with the server when receiving a state sent by the server indicating that the server is performing file synchronization with another device for synchronization.

6. The method according to any one of claims 1 to 5, wherein an operation specified by the identifier and the operation of the file to be synchronized comprises upload, download, rename or delete.

7. The method according to any one of claims 1 to 6, further comprising:
setting a synchronization mode, wherein the synchronization mode comprises one-way synchronization, two-way synchronization or selective synchronization.

8. The method according to any one of claims 1-7, wherein a file list snapshot refers to image information of a file list at a certain time point, the file list snapshot includes file list information and a file state, where the file state is set to an initial state, and the file state is used to reflect an update operation of a file in a file list during the comparison to determine a future operation of a file.

9. The method according to any one of claims 1-8, wherein the comparing the first file list snapshot with information of a current local file list further comprises:
finding no record about a file exists in the first file list snapshot;
adding a record of the file in the first file list snapshot; and
seting the state of the file to Local Add.

10. The method according to any one of claims 1-8, wherein the comparing the first file list snapshot with information of a current local file list further comprises: marking all records without an update state in the first file list snapshot as Local Delete.

11. The method according to any one of claims 1-10, wherein the acquire a second file list snapshot further comprising:
determining a change of current local file list by comparing the information of current local file list with the corresponding information in the first file list snapshot; and
generating a second file list snapshot.

12. The method according to any one of claims 1-11, wherein the second file list snapshot is an updated first file list snapshot or a regenerated snapshot.

13. A device for synchronization, comprising:
a first acquisition unit, configured to acquire a first file list snapshot, wherein the first file list snapshot comprises information of a local file list stored when last synchronization ends;
a second acquisition unit, configured to compare the first file list snapshot acquired by the first acquisition unit with information of a current local file list to acquire a second file list snapshot, wherein the second file list snapshot comprises an update operation of the current local file list;
a sending unit, configured to send a file list snapshot request to a server;
a receiving unit, configured to receive a third file list snapshot sent by the server, wherein the third file list snapshot comprises information of a file list of the server; and
a synchronization unit, configured to determine, according to the second file list snapshot acquired by the second acquisition unit and the third file list snapshot received by the receiving unit, an identifier and an operation of a file to be synchronized, and perform file synchronization with the server according to the identifier and the operation of the file to be synchronized.

14. The device according to claim 13, wherein the synchronization unit is specifically configured to determine, according to the second file list snapshot acquired by the second acquisition unit and the third file list snapshot received by the receiving unit, an update operation of the file list of the server; and
determine, according to the update operation of the local file list and the update operation of the file list of the server, the identifier and the operation of the file to be synchronized.

15. The device according to any one of claims 13 to 14, wherein the synchronization unit is further configured to suspend the file synchronization operation with the server when receiving a state sent by the server indicating that the server is performing file synchronization with another device for synchronization.

16. The device according to any one of claims 13 to 15, further comprising:
a setting unit, configured to set a synchronization mode, wherein the synchronization mode comprises one-way synchronization, two-way synchronization or selective synchronization.

## Patentansprüche

1. Dateisynchronisationsverfahren, umfassend:
Beschaffen eines ersten Dateilistenschnappschusses, wobei der erste Dateilistenschnappschuss Informationen einer lokalen Dateiliste umfasst, die gespeichert werden, wenn die letzte Synchronisation endet;
Vergleichen des ersten Dateilistenschnappschusses mit Informationen einer aktuellen lokalen Dateiliste, um einen zweiten Dateilistenschnappschuss zu beschaffen, wobei der zweite Dateilistenschnappschuss eine Aktualisierungsoperation der aktuellen lokalen Dateiliste umfasst;
Senden einer Dateilistenschnappschussanforderung zu einem Server;
Empfangen eines durch den Server gesendeten dritten Dateilistenschnappschusses, wobei der dritte Dateilistenschnappschuss Informationen einer Dateiliste des Servers umfasst; und
Bestimmen einer Kennung und einer Operation einer zu synchronisierenden Datei gemäß dem zweiten Dateilistenschnappschuss und dem dritten Dateilistenschnappschuss und Durchführen von Dateisynchronisation mit dem Server gemäß der Kennung und der Operation der zu synchronisierenden Datei.

2. Verfahren nach Anspruch 1, wobei die Aktualisierungsoperation der aktuellen lokalen Dateiliste lokales Hinzufügen, lokales Löschen und lokales Modifizieren umfasst.

3. Verfahren nach Anspruch 2, wobei das Bestimmen der Kennung und der Operation der zu synchronisierenden Datei gemäß dem zweiten Dateilistenschnappschuss und dem dritten Dateilistenschnappschuss Folgendes umfasst:
Bestimmen einer Aktualisierungsoperation der Dateiliste des Servers gemäß dem zweiten Dateilistenschnappschuss und dem dritten Dateilistenschnappschuss; und
Bestimmen der Kennung und der Operation der zu synchronisierenden Datei gemäß der Aktualisierungsoperation der lokalen Dateiliste und der Aktualisierungsoperation der Dateiliste des Servers.

4. Verfahren nach Anspruch 3, wobei das Bestimmen der Kennung und der Operation der zu synchronisierenden Datei gemäß der Aktualisierungsoperation der lokalen Dateiliste und der Aktualisierungsoperation der Dateiliste des Servers Folgendes umfasst:
Bestimmen einer Operationskategorie gemäß der Aktualisierungsoperation der lokalen Dateiliste und der Aktualisierungsoperation der Dateiliste des Servers;
Zusammenführen der Aktualisierungsoperation der lokalen Dateiliste und der Aktualisierungsoperation der Dateiliste des Servers gemäß der Operationskategorie, um so die Kennung und die Operation der zu synchronisierenden Datei zu bestimmen.

5. Verfahren nach einem der Ansprüche 1 bis 4, wobei das Durchführen der Dateisynchronisation mit dem Server gemäß der Kennung und der Operation der zu synchronisierenden Datei ferner Folgendes umfasst:
Suspendieren der Dateisynchronisationsoperation mit dem Server beim Empfang eines durch den Server gesendeten Zustands, der angibt, dass der Server Dateisynchronisation mit einer anderen Vorrichtung zur Synchronisation durchführt.

6. Verfahren nach einem der Ansprüche 1 bis 5, wobei eine durch die Kennung und die Operation der zu synchronisierenden Datei spezifizierte Operation Hochladen, Herunterladen, Umbenennen oder Löschen umfasst.

7. Verfahren nach einem der Ansprüche 1 bis 6, ferner umfassend:
Setzen eines Synchronisationsmodus, wobei der Synchronisationsmodus unidirektionale Synchronisation, bidirektionale Synchronisation oder selektive Synchronisation umfasst.

8. Verfahren nach einem der Ansprüche 1-7, wobei sich ein Dateilistenschnappschuss auf Bildinformationen einer Dateiliste an einem bestimmten Zeitpunkt bezieht, der Dateilistenschnappschuss Dateilisteninformationen und einen Dateizustand umfasst, wobei der Dateizustand auf einen Anfangszustand gesetzt wird, und der Dateizustand dazu verwendet wird, eine Aktualisierungsoperation einer Datei in einer Dateiliste während des Vergleichs zur Bestimmung einer zukünftigen Operation einer Datei widerzuspiegeln.

9. Verfahren nach einem der Ansprüche 1-8, wobei das Vergleichen des ersten Dateilistenschnappschusses mit Informationen einer aktuellen lokalen Dateiliste ferner Folgendes umfasst:
Finden, dass kein Datensatz über eine Datei in dem ersten Dateilistenschnappschuss existiert,
Hinzufügen eines Datensatzes der Datei in dem ersten Dateilistenschnappschuss; und Setzen des Zustands der Datei auf lokales Hinzufügen.

10. Verfahren nach einem der Ansprüche 1-8, wobei das Vergleichen des Dateilistenschnappschusses mit Informationen einer aktuellen lokalen Dateiliste ferner Folgendes umfasst: Markieren aller Datensätze ohne einen Aktualisierungszustand in dem ersten Dateilistenschnappschuss als lokales Löschen.

11. Verfahren nach einem der Ansprüche 1-10, wobei das Beschaffen eines zweiten Dateilistenschnappschusses ferner Folgendes umfasst:
Bestimmen einer Änderung der aktuellen lokalen Dateiliste durch Vergleichen der Informationen der aktuellen lokalen Dateiliste mit den entsprechenden Informationen in dem ersten Dateilistenschnappschuss; und
Erzeugen eines zweiten Dateilistenschnappschusses.

12. Verfahren nach einem der Ansprüche 1-11, wobei der zweite Dateilistenschnappschuss ein aktualisierter erster Dateilistenschnappschuss oder ein regenerierter Schnappschuss ist.

13. Vorrichtung zur Synchronisation, umfassend:
eine erste Beschaffungseinheit, ausgelegt zum Beschaffen eines ersten Dateilistenschnappschusses, wobei der erste Dateilistenschnappschuss Informationen einer lokalen Dateiliste umfasst, die gespeichert werden, wenn die letzte Synchronisation endet;
eine zweite Beschaffungseinheit, ausgelegt zum Vergleichen des durch die Beschaffungseinheit beschafften ersten Dateilistenschnappschusses mit Informationen einer aktuellen lokalen Dateiliste, um einen zweiten Dateilistenschnappschuss zu beschaffen, wobei der zweite Dateilistenschnappschuss eine Aktualisierungsoperation der aktuellen lokalen Dateiliste umfasst;
eine Sendeeinheit, ausgelegt zum Senden einer Dateilistenschnappschussanforderung zu einem Server;
eine Empfangseinheit, ausgelegt zum Empfangen eines durch den Server gesendeten dritten Dateilistenschnappschusses, wobei der dritte Dateilistenschnappschuss Informationen einer Dateiliste des Servers umfasst; und
eine Synchronisationseinheit, ausgelegt zum Bestimmen einer Kennung und einer Operation einer zu synchronisierenden Datei gemäß dem durch die zweite Beschaffungseinheit beschafften zweiten Dateilistenschnappschuss und dem durch die Empfangseinheit empfangenen dritten Dateilistenschnappschuss und Durchführen von Dateisynchronisation mit dem Server gemäß der Kennung und der Operation der zu synchronisierenden Datei.

14. Vorrichtung nach Anspruch 13, wobei die Synchronisationseinheit spezifisch ausgelegt ist zum Bestimmen einer Aktualisierungsoperation der Dateiliste des Servers gemäß dem durch die zweite Beschaffungseinheit beschafften zweiten Dateilistenschnappschuss und dem durch die Empfangseinheit empfangenen dritten Dateilistenschnappschuss; und
Bestimmen der Kennung und der Operation der zu synchronisierenden Datei gemäß der Aktualisierungsoperation der lokalen Dateiliste und der Aktualisierungsoperation der Dateiliste des Servers.

15. Vorrichtung nach einem der Ansprüche 13 bis 14, wobei die Synchronisationseinheit ferner ausgelegt ist zum Suspendieren der Dateisynchronisationsoperation mit dem Server beim Empfang eines durch den Server gesendeten Zustands, der angibt, dass der Server Dateisynchronisation mit einer anderen Vorrichtung zur Synchronisation durchführt.

16. Vorrichtung nach einem der Ansprüche 13 bis 15, ferner umfassend:
eine Setzeinheit, ausgelegt zum Setzen eines Synchronisationsmodus, wobei der Synchronisationsmodus unidirektionale Synchronisation, bidirektionale Synchronisation oder selektive Synchronisation umfasst.

## Revendications

1. Procédé de synchronisation de fichiers, comprenant :
l'acquisition d'un premier instantané de liste de fichiers, dans lequel le premier instantané de liste de fichiers comprend des informations d'une liste de fichiers locale stockée lorsque la dernière synchronisation se termine ;
la comparaison du premier instantané de liste de fichiers à des informations d'une liste de fichiers locale courante afin d'acquérir un deuxième instantané de liste de fichiers, dans lequel le deuxième instantané de liste de fichiers comprend une opération de mise à jour de la liste de fichiers locale courante ;
l'envoi d'une demande d'instantané de liste de fichiers à un serveur ;
la réception d'un troisième instantané de liste de fichiers envoyé par le serveur, dans lequel le troisième instantané de liste de fichiers comprend des informations d'une liste de fichiers du serveur ; et
la détermination, conformément au deuxième instantané de liste de fichiers et au troisième instantané de liste de fichiers, d'un identifiant et d'une opération d'un fichier devant être synchronisé, et l'exécution de la synchronisation de fichiers avec le serveur conformément à l'identifiant et à l'opération du fichier devant être synchronisé.

2. Procédé selon la revendication 1, dans lequel l'opération de mise à jour de la liste de fichiers locale courante comprend un Ajout Local, une Suppression Locale et une Modification Locale.

3. Procédé selon la revendication 2, dans lequel la détermination, conformément au deuxième instantané de liste de fichiers et au troisième instantané de liste de fichiers, de l'identifiant et de l'opération du fichier devant être synchronisé comprend :
la détermination, conformément au deuxième instantané de liste de fichiers et au troisième instantané de liste de fichiers, d'une opération de mise à jour de la liste de fichiers du serveur ; et
la détermination, conformément à l'opération de mise à jour de la liste de fichiers locale et à l'opération de mise à jour de la liste de fichiers du serveur, de l'identifiant et de l'opération du fichier devant être synchronisé.

4. Procédé selon la revendication 3, dans lequel la détermination, conformément à l'opération de mise à jour de la liste de fichiers locale et à l'opération de mise à jour de la liste de fichiers du serveur, de l'identifiant et de l'opération du fichier devant être synchronisé comprend :
la détermination d'une catégorie d'opérations conformément à l'opération de mise à jour de la liste de fichiers locale et à l'opération de mise à jour de la liste de fichiers du serveur ;
le fusionnement de l'opération de mise à jour de la liste de fichiers locale et de l'opération de mise à jour de la liste de fichiers du serveur conformément à la catégorie d'opérations, de manière à déterminer l'identifiant et l'opération du fichier devant être synchronisé.

5. Procédé selon l'une quelconque des revendications 1 à 4, dans lequel l'exécution de la synchronisation de fichiers avec le serveur conformément à l'identifiant et à l'opération du fichier devant être synchronisé comprend en outre :
la suspension de l'opération de synchronisation de fichiers avec le serveur lors de la réception d'un état envoyé par le serveur indiquant que le serveur exécute la synchronisation de fichiers avec un autre dispositif de synchronisation.

6. Procédé selon l'une quelconque des revendications 1 à 5, dans lequel une opération spécifiée par l'identifiant et l'opération du fichier devant être synchronisé comprennent un téléversement, un téléchargement, un renommage ou une suppression.

7. Procédé selon l'une quelconque des revendications 1 à 6, comprenant en outre :
le réglage d'un mode de synchronisation, dans lequel le mode de synchronisation comprend une synchronisation unidirectionnelle, une synchronisation bidirectionnelle ou une synchronisation sélective.

8. Procédé selon l'une quelconque des revendications 1-7, dans lequel un instantané de liste de fichiers consiste en des informations d'images d'une liste de fichiers en un certain point dans le temps, l'instantané de liste de fichiers comporte des informations de liste de fichiers et un état de fichier, l'état de fichier étant réglé dans un état initial, et l'état de fichier est utilisé pour signaler une opération de mise à jour d'un fichier dans une liste de fichiers pendant la comparaison afin de déterminer une opération à venir d'un fichier.

9. Procédé selon l'une quelconque des revendications 1-8, dans lequel la comparaison du premier instantané de liste de fichiers à des informations d'une liste de fichiers locale courante comprend en outre :
le fait de trouver qu'aucun enregistrement concernant un fichier n'existe dans le premier instantané de liste de fichiers ;
l'ajout d'un enregistrement du fichier dans le premier instantané de liste de fichiers ; et
le réglage de l'état du fichier à Ajout Local.

10. Procédé selon l'une quelconque des revendications 1-8, dans lequel la comparaison du premier instantané de liste de fichiers à des informations d'une liste de fichiers locale courante comprend en outre :
le marquage de tous les enregistrements sans état de mise à jour dans le premier instantané de liste de fichiers en tant que Suppression Locale.

11. Procédé selon l'une quelconque des revendications 1-10, dans lequel l'acquisition d'un deuxième instantané de liste de fichiers comprend en outre :
la détermination d'un changement de liste de fichiers locale courante en comparant les informations de liste de fichiers locale courante aux informations correspondantes dans le premier instantané de liste de fichiers ; et
la génération d'un deuxième instantané de liste de fichiers.

12. Procédé selon l'une quelconque des revendications 1-11, dans lequel le deuxième instantané de liste de fichiers est un premier instantané de liste de fichiers mis à jour ou un instantané régénéré.

13. Dispositif de synchronisation, comprenant :
une première unité d'acquisition, configurée pour acquérir un premier instantané de liste de fichiers, dans lequel le premier instantané de liste de fichiers comprend des informations d'une liste de fichiers locale stockée lorsque la dernière synchronisation se termine ;
une deuxième unité d'acquisition, configurée pour comparer le premier instantané de liste de fichiers acquis par la première unité d'acquisition à des informations d'une liste de fichiers locale courante afin d'acquérir un deuxième instantané de liste de fichiers, dans lequel le deuxième instantané de liste de fichiers comprend une opération de mise à jour de la liste de fichiers locale courante ;
une unité d'envoi, configurée pour envoyer une demande d'instantané de liste de fichiers à un serveur ;
une unité de réception, configurée pour recevoir un troisième instantané de liste de fichiers envoyé par le serveur, dans lequel le troisième instantané de liste de fichiers comprend des informations d'une liste de fichiers du serveur ; et
une unité de synchronisation, configurée pour déterminer, conformément au deuxième instantané de liste de fichiers acquis par la deuxième unité d'acquisition et au troisième instantané de liste de fichiers reçu par l'unité de réception, un identifiant et une opération d'un fichier devant être synchronisé, et exécuter la synchronisation de fichiers avec le serveur conformément à l'identifiant et à l'opération du fichier devant être synchronisé.

14. Dispositif selon la revendication 13, dans lequel l'unité de synchronisation est spécifiquement configurée pour déterminer, conformément au deuxième instantané de liste de fichiers acquis par la deuxième unité d'acquisition et au troisième instantané de liste de fichiers reçu par l'unité de réception, une opération de mise à jour de la liste de fichiers du serveur ; et
déterminer, conformément à l'opération de mise à jour de la liste de fichiers locale et à l'opération de mise à jour de la liste de fichiers du serveur, l'identifiant et l'opération du fichier devant être synchronisé.

15. Dispositif selon l'une quelconque des revendications 13 et 14, dans lequel l'unité de synchronisation est en outre configurée pour suspendre l'opération de synchronisation de fichiers avec le serveur lors de la réception d'un état envoyé par le serveur indiquant que le serveur exécute la synchronisation de fichiers avec un autre dispositif de synchronisation.

16. Dispositif selon l'une quelconque des revendications 13 à 15, comprenant en outre :
une unité de réglage, configurée pour régler un mode de synchronisation, dans lequel le mode de synchronisation comprend une synchronisation unidirectionnelle, une synchronisation bidirectionnelle ou une synchronisation sélective.
